# EUROPÄISCHE PATENTSCHRIFT

(11) **EP 1 984 160 B1**
(45) Veröffentlichungstag und Bekanntmachung des Hinweises auf die Patenterteilung: **07.07.2010**
(21) Anmeldenummer: 06818943.0
(22) Anmeldetag: 01.12.2006
(51) Int. Cl.: B29C 45/14, B60J 10/00

(54) **FORMTEIL**
MOULDING
PIECE MOULEE

(30) Priorität: 16.02.2006 DE 202006002438 U
(43) Veröffentlichungstag der Anmeldung: 29.10.2008
(73) Patentinhaber: Meteor Gummiwerke K.H. Bädje GmbH & Co. KG, 31167 Bockenem (DE)
(72) Erfinder: LANGEMANN, Uwe, 38228 Salzgitter (DE)
(74) Vertreter: Sobisch, Peter
(86) Internationale Anmeldenummer: PCT/EP2006/011542
(87) Internationale Veröffentlichungsnummer: WO 2007/093206

(56) Entgegenhaltungen:
- EP-A2- 1 380 777
- EP-B1- 0 862 699
- GB-A- 830 143
- GB-A- 1 111 284
- US-A- 3 208 119

## Beschreibung

Die Erfindung bezieht sich auf ein Formteil entsprechend dem Oberbegriff des Anspruchs 1.

Das Problem, ein aus Kunststoff bestehendes Formteil an einer anderen, eine Trägerfunktion erfüllenden Baugruppe rationell zu befestigen stellt sich grundsätzlich im gesamten Bereich der Technik, so dass die Befestigung von Dichtungsprofilen, Schutzprofilen oder auch Zierprofilen an Teilen eines Fahrzeugs lediglich beispielhaft zu sehen ist.

Aus der US 6,546,683 ist ein Verfahren zum Befestigen einer Zierleiste im Fensterbereich eines Fahrzeugs bekannt, welche Zierleiste eine global Uförmige Gestalt aufweist, deren freie Enden einwärts gerichtete Stege bilden, wobei ein aus Kunststoff bestehender, mit einem Trägerbauteil in Verbindung stehender Haltestreifen vorgesehen ist, mit welchem ein metallischer Halteclip verrastet werden kann. An dem Halteclip sind gleichzeitig Federarme angeformt, die zum elastischen Hintergreifen der an den freien Enden der Zierleiste angeformten Stege bestimmt sind und die Zierleiste auf diese Weise fixieren. Die gezeigte Art der Befestigung setzt neben der Anpassung der Zierleiste auch eine mit dem Fahrzeug in fester Verbindung stehende, mit dem Halteclip zusammenwirkende Haltestruktur voraus und gestaltet sich vergleichsweise aufwändig.

Aus der DE 43 00 113 ist es bekannt, zur Verbindung einer Zierplatte mit einem Tragteil, hier einem Stoßfänger an Letzterem eine U-förmige Abkantung anzuformen, von welcher - sich in Richtung der Abkantung erstreckend - mehrere Stege hervorspringen. Die Stege sind zum Einführen in Schlitze der Zierplatte bestimmt, wobei jedem Schlitz ein aus zwei winkelartigen Bauelementen bestimmtes Halteglied zugeordnet ist, welches zum Zusammenwirken mit einer Halteklammer eingerichtet ist, die ihrerseits zur Aufnahme und reibschlüssigen Fixierung der genannten Stege ausgebildet ist. Diese Art der Befestigung eines Bauteils setzt ebenfalls spezielle Anpassungen sowohl an dem Tragteil als auch an dem an diesem zu befestigenden Bauteil voraus, wobei ein loses Teil, nämlich eine metallische Halteklammer hinzutritt. Es handelt sich im Ergebnis somit um eine außerordentlich spezialisierte Befestigungsform, deren montagemäßige Handhabung sich insbesondere arbeitsaufwändig gestaltet.

Aus der EP 0 862 699 ist eine zur Verwendung im Fahrzeugbau, insbesondere zum Aufstecken auf einen Randsteg bestimmte Profildichtung bekannt. Diese ist mit einer Befestigungseinrichtung versehen, die aus einer aus Kunststoff hergestellten, im Querschnitt global U-förmig gestalteten Halteklammer besteht, die in ein metallisches, ebenfalls global U-förmig gestaltetes Halteteil eingesetzt ist. Diese Befestigungseinrichtung wird durch Umspritzen mit dem Werkstoff der Profildichtung fest mit dieser verbunden, wobei der, durch die innere Halteklammer umgrenzte Raum zur Aufnahme des genannten Randsteges bestimmt ist. Eine - in einem Querschnitt gesehen - zentrische Position der Halteklammer innerhalb des Halteteils ist durch Einprägungen des Halteteils gegeben, an denen die zugekehrten Außenseiten der Halteklammer anliegen, wobei die freien Enden der U-förmigen Profile des Halteteils und der Halteklammer mit Hinblick auf eine formschlüssige Auszugssicherung dieser beiden Teile hin ausgebildet sind. In einem etwa mittigen Bereich der Halteklammer ist quer zu dieser ein Steg angeformt, der in einen Schlitz des Halteteils hineinragt und einen in Längsrichtung dieser beiden Teile wirksamen Formschluss bewirkt, so dass auch in dieser Richtung eine Zentrierung der Halteklammer innerhalb des Halteteils gegeben ist.

Es ist vor diesem Hintergrund die Aufgabe der Erfindung, ein Formteil der eingangs bezeichneten Art mit der Maßgabe auszugestalten, dass bei einfacher montagemäßiger Handhabung der Sitz des Formteils auf einem Randsteg eines Trägerbauteils oder dergleichen weiter verbessert, insbesondere stabilisiert wird. Gelöst ist diese Aufgabe bei einem solchen Formteil durch die Merkmale des Kennzeichnungsteils des Anspruchs 1.

Ein Klammereinsatz, der zur Vermittlung wenigstens eines Reibschlusses mit dem stegartigen Bauteil, z. B. dem umlaufenden Randsteg einer Öffnung eines Fahrzeugs bestimmt ist, wird in an sich bekannter Weise unmittelbar während der Formgebung des Formteils mit diesem fest verbunden. Beispielsweise kann der Klammereinsatz unmittelbar in ein, zur Herstellung des Formteils bestimmtes Formwerkzeug eingesetzt werden, so dass im Rahmen eines Spritzvorgangs der Klammereinsatz teilweise in den Werkstoff des Formteils eingebunden wird und einen stabilen Sitz erhält. In jedem Fall bildet der Klammereinsatz Kontaktflächen, die im Montagezustand des Formteils mit dem genannten Bauteil in Berührung stehen, so dass ein auf diesem Wege erreichbarer Reibschluss durch die Werkstoffpaarung der Kontaktflächen, jedoch auch durch den, den Klammereinsatz während eines Spritzprozesses beaufschlagenden Druck des zu formenden Werkstoffs des Formteils, insbesondere dessen Elastizität bedingt ist. Es entfallen somit Anpassungsarbeiten an dem genannten stegartigen Bauteil und es kann das auf diesem Wege ausgerüstete Formteil unmittelbar durch Aufstecken montiert werden. Mit dem Klammereinsatz in Verbindung steht ein metallisches, im Querschnitt global ebenfalls U-förmiges Klammerteil, in welches der Klammereinsatz eingesteckt und in welchem er fixiert ist. Von diesem Klammerteil geht eine festigkeitserhöhende Wirkung aus - gleichzeitig werden durch dieses elastische Federkräfte bereitgestellt, welche eine zeitlich konstante Anpresskraft zwischen dem genannten Bauteil und den diesem zugekehrten Flächen des Klammereinsatzes bewirken. Der aus einem Kunststoff bzw. einem elektrisch nicht leitfähigen Werkstoff bestehende Klammereinsatz dient unter anderem der Bereitstellung eines ausreichenden Reibschlusses auf dem genannten Bauteil. Er verhindert zugleich elektrochemisch bedingte Korrosionserscheinungen der einander berührenden Flächen der Befestigungseinrichtung einerseits und des genannten Bauteils andererseits. Aus Kunststoff bestehende Klammereinsätze sind als solche bekannt und im Handel allgemein erhältlich. Anwendung finden kann diese Art der Befestigung bei unterschiedlichen Formteilen, wobei lediglich beispielhaft Dichtleisten, Schutzleisten und sonstige Profilleisten genannt sein sollen. Von dem Klammereinsatz fort, somit außenseitig erstrecken sich Federzungen, welche vollständig in den Werkstoff des Formteils eingebunden sind und von welchen ein stabilisierender Einfluß auf das Klammerteil ausgeübt wird. Insbesondere ergibt sich nach Maßgabe der Erstreckung der Federzungen eine beträchtliche Versteifung des Klammerteils und auf diesem Wege auch des Klammereinsatzes. Dies wiederum stabilisiert die zwischen dem Klammereinsatz und dem genannten Bauteil wirksamen Haltekräfte , so dass das Formteil auch im Zeitablauf eine gleichbleibende sichere Befestigung erfährt.

Die Merkmale des Anspruchs 2 sind auf eine bestimmte räumliche Orientierung der Federzungen des Klammerteils gerichtet. Diese bringt den Vorteil mit sich, dass von den Federzungen gleichzeitig eine verbesserte Auszugssicherung hinsichtlich eines Ausziehens der Befestigungseinrichtung aus der Substanz des Formteils gegeben ist.

Die Merkmale der Ansprüche 3 und 4 sind auf eine Ausgestaltung des Klammerteils als solchem gerichtet. Dieses kann hiernach in eine Ummantelung eingebunden sein, die vorzugsweise aus einem Kunststoff, z. B. Polypropylen besteht. In Betracht kommen jedoch auch Beschichtungen aus elastomeren Werkstoffen. Die Ummantelung kann in einem Spritzvorgang aufgetragen werden - in Betracht kommt jedoch auch ein Beschichten mittels einer Folie, die mit dem Klammerteil verklebt ist. Durch eine solche Ummantelung wird eine Schutzfunktion eingerichtet, z. B. gegenüber korrosiven Angriffen auf das Metall des Klammereinsatzes. Nachdem die im vorstehenden Sinne dargestellte Befestigungseinrichtung zum Einsetzen in ein Formteil, insbesondere zur Verbindung mit dessen Werkstoff bestimmt ist, kann der Werkstoff der Ummantelung in Abhängigkeit von dem Werkstoff des Formteils gewählt werden, beispielsweise mit dem Ziel, den Verbund zwischen dem Klammerteil einerseits und dem Formteil andererseits zu verbessern, so dass sich ein besonders belastbare, eine hohes Maß an Auszugssicherheit aufweisende Verbindung hergestellt ist.

Die Merkmale des Anspruchs 5 sind auf eine besonders einfache Art der Darstellung der genannten Federzungen gerichtet, da es sich bei diesen hiernach um Wandungsabschnitte des Klammerteiles handelt. Gleichzeitig ergeben sich auf diesem Wege Ausnehmungen innerhalb der genannten Wandungen, welche während des Umspritzens mit dem Werkstoff des Formteils ausgefüllt werden. Dies bringt eine weitere Stabilisierung der Verbindungszustands von Klammerteil und Klammereinsatz mit sich.

Gemäß den Merkmalen des Anspruchs 6 kann der Grundkörper des Formteils aus einem elastomeren Werkstoff bestehen. Lediglich beispielhaft genannt seien in diesem Zusammenhang TPE (Thermoplastic Elastomer) und EPDM (Ethylen/Propylen-Dien-Terpolymer).

Der Klammereinsatz ist innerhalb des Klammerteils entsprechend den Merkmalen des Anspruchs 7 zumindest reibschlüssig fixiert. Eine formschlüssige, beispielsweise auf einer elastischen Verrastung bestehende Fixierung kann grundsätzlich hinzutreten Im montierten, dass heißt mit einem Formteil verbundenen Zustand treten Haltekräfte hinzu, die sich aus dem teilweisen Umspritzen mit dem Werkstoff des Formteils ergeben.

Die Merkmale der Ansprüche 8 bis 10 bringen den Vorteil mit sich, dass der Klammereinsatz innerhalb des Klammerteils eine eindeutige und insbesondere reproduzierbare Positionierung erfährt, und zwar in Längsrichtung des Klammerteils gesehen. Gleichzeitig kann über die genannten Federzungen nach Maßgabe deren Bemessung eine großflächig übertragene elastische Vorspannkraft auf die Wandungen beziehungsweise Schenkel des Klammereinsatzes ausgeübt werden. Diese Federzungen können vorteilhaft durch Wandungsabschnitte des Klammerteils gebildet werden, die lediglich einwärts auszustellen sind. Durch die flächige Anlage der Federzungen ergibt sich auch der Vorteil einer Versteifung des Profils des Klammereinsatzes und damit ein Beitrag zur Bereitstellung hoher auch im Zeitablauf stabiler Abzugskräfte.

Dadurch, dass entsprechend den Merkmalen des Anspruchs 11 der U-förmige Querschnitt des Klammereinsatzes, der zum Zusammenwirken mit dem genannten, eine Tragfunktion erfüllenden Bauteil bestimmt ist, einen beginnend mit einem Einführungsspalt sich in Richtung eines Profilgrundes des Querschnittes hin konisch leicht erweiternden Verlauf aufweist, kann erreicht werden, dass nach erfolgtem Einstecken des genannten Bauteils ein großflächiger, einen zuverlässigen Reibschluss vermittelnder Kontakt zwischen diesem und den zugekehrten Innenflächen des Klammereinsatzes hergestellt ist.

Die Merkmale der Ansprüche 12 und 13 bringen den Vorteil mit sich, das ein großflächiger, zur Ausübung einer Stützwirkung geeigneter Kontakt zwischen den Außenseiten des Klammereinsatzes und den diesen zugekehrten Innenseiten des Klammerteils eingerichtet ist. Indem die an den freien Enden des Klammereinsatzes und des Klammerteils gebildeten abgekanteten Abschnitte in den Werkstoff des Grundkörpers des Formteils eingebunden sind, ergibt sich eine weitere, die Position der Befestigungseinrichtung innerhalb des Formteils sichernde Wirkung.

Die Merkmale der Ansprüche 14 und 15 bringen den Vorteil einer stabilen Positionierung der Befestigungseinrichtung mit sich, wobei ein durch die Querprofilierungen vermittelter Formschluss durch weitere Öffnungen des Klammerteils begünstigt wird, in welche während des, auf eine Formgebung des Formteils gerichteten Umspritzvorgangs Formmasse eindringt und eine Haltewirkung ausübt.

Man erkennt der vorstehenden Ausführungen, dass ein erfindungsgemäß ausgerüstetes Formteil in besonderer Weise mit Hinblick auf eine standardisierte Montage vorbereitet ist, nämlich soweit hierzu auf einem Trägerbauteil lediglich ein Steg, ein Flansch oder eine vergleichbare, zum Aufstecken geeignete Struktur bereitgestellt werden muss. An dem Formteil selbst sind zur Montage keine weiteren Vorkehrungen zu treffen, so dass dieses sich insbesondere für den Einsatz in mechanisierten Fertigungsstraßen eignet.

Die Erfindung wird im Folgenden unter Bezugnahme auf das in den Zeichnungen schematisch wiedergegebene Ausführungsbeispiel näher erläutert werden. Es zeigen:
Fig. 1 eine Querschnittsdarstellung eines mit einer erfindungsgemäßen Befestigungseinrichtung ausgerüsteten Formteiles;
Fig. 2 eine isolierte Darstellung einer perspektivischen Ansicht der erfindungsgemäßen Befestigungseinrichtung;
Fig. 3 eine Darstellung des in der Befestigungseinrichtung eingesetzten Klammerteiles in einem Querschnitt entsprechend einer Schnittebene III-III der Fig.8;
Fig. 4 eine Darstellung der Befestigungseinrichtung gemäß Fig. 2 in einer Seitenansicht;
Fig. 5 eine Darstellung eines Querschnitts der Befestigungseinrichtung entsprechend einer Schnittebene V-V der Fig. 4;
Fig. 6 eine isolierte Darstellung des Klammereinsatzes der Befestigungseinrichtung gemäß Fig. 2 in einer Seitenansicht;
Fig. 7 eine Darstellung eines Querschnittes des Klammereinsatzes entsprechend einer Schnittebene VII-VII der Fig. 6;
Fig. 8 eine isolierte Darstellung des Klammerteiles gemäß Fig. 2 in einer Seitenansicht.

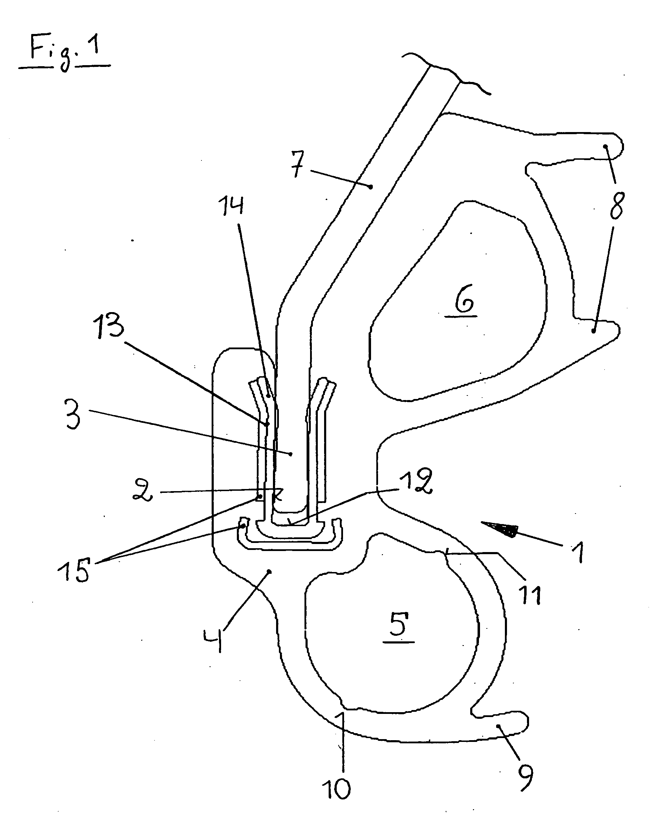

Mit 1 ist in Fig. 1 global ein aus einem elastomeren Werkstoff, zum Beispiel EPDM (Ethylen/Propylen-Dien-Terpolymere) oder auch TPE (Thermoplastic Elastomer) hergestelltes Formteil bezeichnet, welches auf seiner in der Zeichnung linken Seite mit einer U-förmigen Aufnahme 2 versehen ist.

In die Aufnahme ist ein Flansch bzw. Steg 3 eingesteckt, bei welchem es sich um einen integralen Bestandteil einer Fahrzeugkarosserie, zum Beispiel einer Fahrzeugöffnung oder auch einer zum Verschließen dieser Öffnung bestimmten Türkonstruktion handeln kann. Das Formteil kann somit beispielsweise ein Dichtungsprofil sein, welches aus einem, die Aufnahme 2 umfassenden Befestigungsteil 4 besteht, an welchem zwei Hohlprofile 5, 6 angeformt sind. Der Steg 3 bildet an seinem, aus der Aufnahme herausragenden Teil einen abgekanteten Abschnitt 7, auf dessen einer, in der Zeichnung rechten Seite das Hohlprofil 6 anliegt, wohingegen das Hohlprofil 5 an einem, dem Ende der Aufnahme 2 zugekehrten Bereich des Befestigungsteils 4 mit Abstand von dem Hohlprofil 6 angeordnet ist.

Beide Hohlprofile 5, 6 sind auf ihren, den Steg 3 bzw. den Abschnitt 7 abgekehrten Seiten mit Dichtungslippen 8, 9 ausgerüstet, die zum Zusammenwirken mit zeichnerisch nicht wiedergegebenen, gegenüber dem Abschnitt 7 fest oder beweglich angeordneten Teilen einer Fahrzeugkarosserie bzw. einer Türe bestimmt sind. Hierauf soll jedoch im Folgenden nicht näher eingegangen werden.

Mit 10, 11 sind einander diametral auf der Innenseite des im Querschnitt global kreisförmigen Querschnitts des Hohlprofils gegenüberliegende Wanddickenschwächungen bezeichnet, durch welche die Elastizität des Hohlprofils 5 in Richtung auf einen Aufnahmegrund 12 hin erhöht wird. Die Hohlprofile 5, 6, insbesondere die Bemessung deren Wanddicken - in peripherer Richtung gesehen - sind mit Hinblick auf die Bereitstellung einer ausreichenden Elastizität bzw. eines hinreichenden Rückstellvermögens bemessen. Auch hierauf soll jedoch im Folgenden nicht näher eingegangen werden.

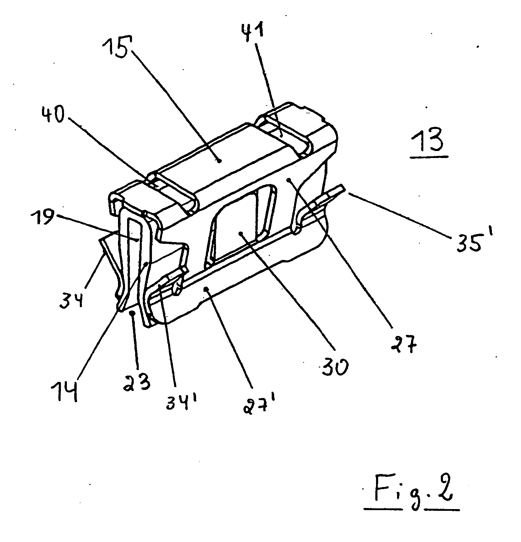

In den Werkstoff des Grundkörpers des Formteils 1 im Wesentlichen eingebunden ist eine Befestigungseinrichtung 13, welche aus einem innenseitigen, d.h. den unmittelbaren Kontakt zu dem Steg 3 vermittelnden Klammereinsatz 14 und einen diesen außenseitig umgebenden Klammerteil 15 besteht, wobei zur näheren Beschreibung dieser beiden Bauelemente auf die folgenden Fig. 2 bis 8 Bezug genommen wird.

Wesentlich ist insoweit, dass die Montage eines mit einer solchen Befestigungseinrichtung 13 ausgerüsteten Formteils 1 durch einfaches Aufstecken auf das freie Ende des Steges 3 möglich ist, wobei sich infolge der besonderen Eigenschaften des aus der Befestigungseinrichtung 13 und dem Formteil 1 bestehenden Verbundsystem vorteilhafte Eigenschaften hinsichtlich eines stabilen Sitzes des Formteils 1 ergeben.

Wie aus Fig. 2 ersichtlich ist, sind sowohl das Klammerteil 15 als auch der Klammereinsatz 14 als global U-förmige Bauelemente konzipiert, wobei der Klammereinsatz 14 in das Klammerteil 15 eingesetzt ist. Die aus diesen beiden Bauelementen bestehende Befestigungseinrichtung 13 kann zur Herstellung des Formteiles 1 in ein, zu dessen Gestaltung eingerichtetes Formwerkzeug eingesetzt werden und mit dem sich anschließenden Spritzverfahren in dessen Werkstoff an der Stelle der eingangs vorgestellten Aufnahme mit der Maßgabe eingebunden werden, dass lediglich die Innenseiten des Klammereinsatzes 14 frei liegen, die für einen unmittelbaren Kontakt mit dem Steg 3 bestimmt sind.

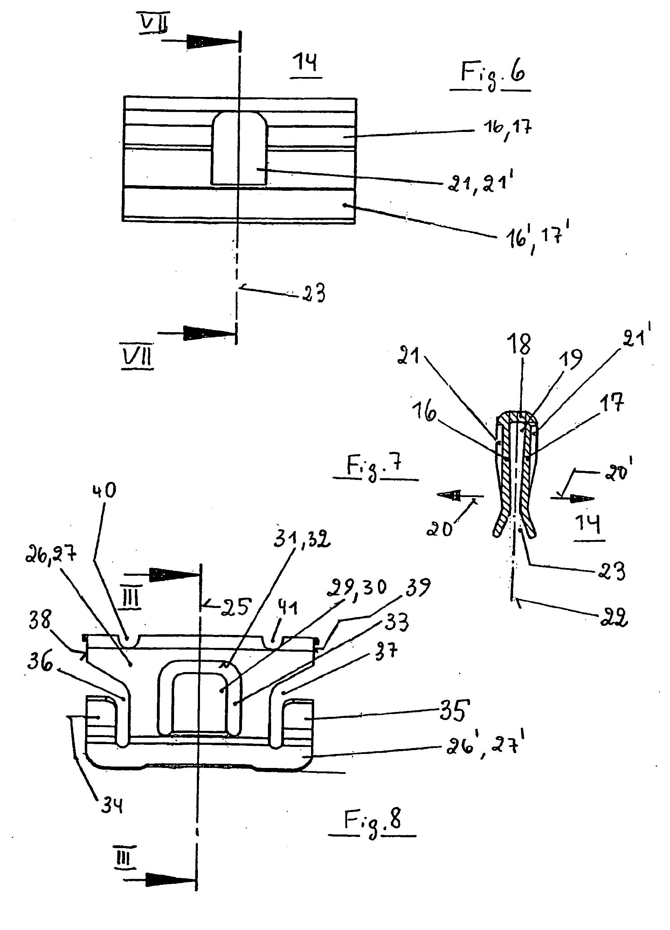

Wie die Fig. 6 und 7 im Einzelnen zeigen, umgrenzen die Schenkel 16, 17 des Klammereinsatzes 14 einen sich in Richtung auf den Profilgrund 18 hin konisch leicht erweiternden Querschnittsraum 19.

In die Schenkel 16, 17, und zwar deren Außenseiten sind einander gegenüberliegende Ausnehmungen 21, 21' eingeformt, und zwar symmetrisch sowohl bezüglich einer vertikalen Querschnittsmittelebene 22 als auch bezüglich einer Seitenansichtsmittelebene 23 der in Fig. 6 gezeigten Seitenansicht.

Die freien Enden der Schenkel 16, 17 sind in Richtung von der Querschnittsebene 22 fort gerichtet, und zwar symmetrisch zu dieser abgewinkelt. Auf diese Weise ergibt sich für ein Einschieben des Steges 3 ein sich in Richtung auf den Querschnittsraum 19 hin konisch verjüngender Einführungsspalt 23, der als Montagehilfe wirkt.

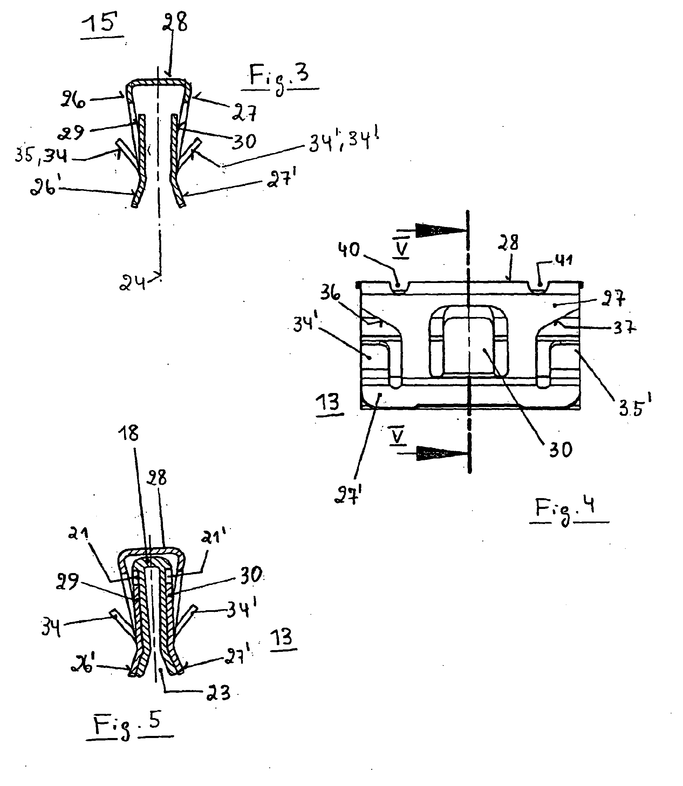

Wie die Fig. 3 und 8 im Einzelnen erkennen lassen, weist das aus Metall bestehende Klammerteil 15 ebenfalls einen bezüglich einer vertikalen Querschnittsmittelebene 24 sowie einer Seitenansichtsmittelebene 25 symmetrischen Aufbau auf. Man erkennt wiederum zwei Seitenschenkel 26, 27, die sich ausgehend von einem Profilgrund 28 zunächst konisch einwärts in Richtung auf die genannte Querschnittsebenen hin erstrecken, wobei die freien Enden 26', 27' wiederum in Analogie zu den freien Enden 16', 17' des Klammereinsatzes 14 ausgehend von der Querschnittsebene in auswärtiger Richtung abgekantet sind.

Mit 29, 30 sind Federzungen bezeichnet, die innerhalb von Ausnehmungen 31, 32 der Schenkel 26, 27 gebildet sind, gegenüber diesen im entspannten, in Fig. 3 gezeigten Zustand einwärts in Richtung auf die Querschnittsmittelebene 24 hin abgewinkelt sind. Die Abmessungen dieser Federzungen 29, 30 sind geringer als diejenigen der genannten Ausnehmungen bemessen.

Wie insbesondere in Fig. 8 erkennbar ist, ergibt sich somit in der Seitenansicht ein Zwischenraum 33 zwischen den einander zugekehrten Kanten der Federzungen 29, 30 einerseits und der Ausnehmungen 31, 32 andererseits.

Der Zweck dieser Federzungen 29, 30 wird im Folgenden noch erläutert werden.

Mit 34, 34'; 35, 35' sind weitere Federzungen bezeichnet, die sich ausgehend von den Ebenen der Schenkel 26, 27 und den ungefähren Ansatzstellen der abgekanteten Abschnitte 26', 27' ausgehend in Richtung auf den Profilgrund 28 von der Querschnittsebene 24 fort erstrecken. Sie befinden sich jeweils an den seitlichen Enden der beiden Schenkel 26, 27.

Diese Federzungen 34, 35; 34', 35' sind ausgehend von den ebenen Schenkeln 26, 27 bzw. 26', 27' dadurch gebildet, dass in die einander gegenüberliegenden Stirnseiten 38, 39 jeweils Schlitze 36, 37 eingeformt werden, die sich in einem Anfangsbereich schräg von dem Profilgrund fort in Richtung auf die Seitenansichtsmittelebene 25 hin und anschließend parallel zu dieser bis in etwa den Bereich erstrecken, in dem die abgekanteten Abschnitte 26, 27, 26', 27' ansetzen. Die durch die Schlitze 36, 37 abgetrennten, sich im Wesentlichen parallel zu der Seitenansicht der Mittelebene 25 erstreckenden Abschnitte der Schenkel bilden die genannten, aus der Ebene der genannten Schenkel in einer Richtung von der Querschnittsmittelebene 24 auswärts abgekanteten Federzungen 34, 35; 34', 35'.

Schließlich sind mit 40, 41 schlitzartige, sich quer zu der Querschnittsmittelebene 24 erstreckende Durchbrüche des Profilgrundes 28 bezeichnet, die sich in der Nähe der stirnartigen Enden des Klammerteils 15 befinden.

Wie eingangs bereits erwähnt ist der Klammereinsatz 14 zum Einsetzen in das Klammerteil 15 bestimmt, wobei die Fig. 2, 4 und 5 diesen zusammengesetzten Zustand zeigen. Hierbei werden die Federzungen 29, 30 des Klammerteils 15 in den seitlichen Ausnehmungen 21,21' des Klammereinsatzes 14 aufgenommen, wobei im endgültig ineinander gesteckten Zustand eine flächige Anlage zwischen den Innenseiten der Federzungen 29, 30 einschließlich der abgekanteten Abschnitte 26', 27' an den zugekehrten Seiten der Schenkel 16, 17 sowie deren abgekanteten Abschnitte 16', 17' gegeben ist. Diese Anlage kann mit der Maßgabe eingerichtet sein, dass der Einsteckzustand unter geringfügiger elastischer Verformung der miteinander in Berührung stehenden Teile des Klammereinsatzes 14 und des Klammerteils 15 gegeben ist.

Man erkennt, dass die Erstreckung der Ausnehmungen 21, 21' größer angelegt ist als die Erstreckung der in diesen aufgenommenen Federzungen 29, 30, so dass - wie insbesondere die Fig. 4 und 5 zeigen - sich an den, dem Profilgrund 18 zugekehrten Enden der Ausnehmungen 21, 21' Leerabschnitte verbleiben.

Eine im vorstehenden Sinne vorbereitete, aus dem Klammerteil 15 und dem Klammereinsatz 14 bestehende Befestigungseinrichtung 13 wird anschließend in ein Formwerkzeug eingesetzt, in welchem der Formgebungsprozess des Formteils 1 stattfindet, wobei es zu einem weitestgehenden Umspritzen der Befestigungseinrichtung kommt und wobei lediglich der U-förmige Querschnittsraum 19 des Klammereinsatzes 14 verbleibt.

Man erkennt, dass aufgrund der Einbindung der abgekanteten Abschnitte 26, 26', 27' eine zuverlässige Einbindung in den Werkstoff des Formteils gegeben ist, der ein hohes Maß an Auszugssicherheit bildet. Man erkennt ferner, dass aufgrund der eingangs erwähnten Leerräume innerhalb der Ausnehmungen 21, 21', die im endgültigen Zustand mit dem Werkstoff des Formteils ausgefüllt sind, eine zuverlässige formschlüssige Fixierung des Klammereinsatzes 14 innerhalb des Klammerteils 15 gegeben ist, wobei ferner eine zuverlässige, formschlüssig wirksame Verankerung durch die Federzungen 34, 35; 34', 35' gegeben ist.

Eine insbesondere in Längsrichtung der Befestigungseinrichtung 13 wirksame formschlüssige Verankerung in dem Werkstoff des Formteils ist über die Durchbrüche 40, 41 gegeben.

Man erkennt auch, dass im montierten Zustand des Formteils kein unmittelbarer Kontakt zwischen dem metallischen Steg 3 einerseits und dem ebenfalls metallischen Klammerteil 15 andererseits besteht.

Der Kunststoff des Einsatzteils 14 kann mit Hinblick auf die Bereitstellung eines ausreichenden Reibschlusses gewählt werden, wobei infolge der großflächigen Beaufschlagung der U-förmigen Befestigungseinrichtung mit dem Werkstoff des Formteils, insbesondere dessen Druck eine ausreichende Steifigkeit bereitgestellt wird, welche einen stabilen Sitz des Formteils sicherstellt. Dies wird besonders durch die sich auswärts von dem Klammerteil fort in dem Werkstoff des Formteiles erstreckenden Federzungen erreicht.

Schließlich gestaltet sich die Montage eins im vorstehenden Sinne vorbereiteten Formteils außerordentlich einfach.

## Patentansprüche

1. Formteil (1) bestehend aus einem, durch einen Gieß- oder Spritzvorgang gestalteten Grundkörper und einer mit diesem während dessen Formgebung verbundenen Befestigungseinrichtung (13), die zur Darstellung einer Befestigung des Formteils (1) auf einem stegartigen, eine Tragfunktion erfüllenden Bauteil bestimmt und eingerichtet ist, wobei die Befestigungseinrichtung (13) aus einem U-förmigen metallischen Klammerteil (15) besteht, in welches ein U-förmiger, einen zur Aufnahme des genannten Bauteils bestimmter Schlitz definierender, zumindest einen Reibschluss mit dem genannten Bauteil vermittelnder, aus einem Kunststoff bestehender Klammereinsatz (14) eingesetzt ist, **dadurch gekennzeichnet, dass** an dem Klammerteil (15) Federzungen (34, 34'; 35, 35') angeformt sind, die sich außenseitig von dessen Struktur fort erstrecken.

2. Formteil nach Anspruch 1, **dadurch gekennzeichnet, dass** sich die Federzungen (34, 34'; 35, 35') unter einem Winkel bezüglich einer Querschnittsmittelebene (24) erstrecken, und zwar - in Richtung auf einen Profilgrund (28) hin gesehen - von dieser Querschnittsmittelebene (24) fort.

3. Formteil nach Anspruch 1 oder 2, **dadurch gekennzeichnet, dass** das Klammerteil (15) zumindest teilweise in eine aus einem Kunststoff bestehende Ummantelung eingebunden ist.

4. Formteil nach Anspruch 1 oder 2, **dadurch gekennzeichnet, dass** das Klammerteil (15) zumindest teilweise in eine, aus einem Kunststoff bestehende Folie eingebunden ist.

5. Formteil nach einem der vorangegangenen Ansprüche 1 bis 4, **dadurch gekennzeichnet, dass** die Federzungen (34, 34'; 35, 35') durch auswärts ausgeformte, teilweise von einem Schlitz begrenzte Wandungsabschnitte des Klammerteils (15) gebildet sind.

6. Formteil (1) nach einem der vorangegangenen Ansprüche 1 bis 4, **dadurch gekennzeichnet, dass** der genannte Grundkörper aus einem elastomeren Werkstoff besteht.

7. Formteil (1) nach einem der vorangegangenen Ansprüche 1 bis 6, **dadurch gekennzeichnet, dass** der Klammereinsatz (14) zumindest reibschlüssig innerhalb des Klammerteils (15) gehalten ist.

8. Formteil (1) nach einem der vorangegangenen Ansprüche 1 bis 7, **dadurch gekennzeichnet, dass** an der Innenseite des Klammerteils (15) sich einwärts erstreckende Federzungen (29, 30) angeformt sind, und dass diese Federzungen im zusammengesetzten Zustand der Befestigungseinrichtung (13) in außenseitigen Ausnehmungen (21, 21') des Klammereinsatzes (14) aufgenommen sind.

9. Formteil nach Anspruch 8, **dadurch gekennzeichnet, dass** die Federzungen (29, 30) durch einwärts geformte, teilweise von einem Schlitz umgebene Wandungsabschnitte des Klammerteils (15) gebildet sind.

10. Formteil nach Anspruch 8 oder 9, **dadurch gekennzeichnet, dass** sich die Federzungen (29, 30) des Klammerteils (15) im zusammengesetzten Zustand der Befestigungseinrichtung (13) in den Ebenen der Wandungen bzw. Schenkel (16, 17) des Klammereinsatzes (14) erstrecken.

11. Formteil nach einem der vorangegangenen Ansprüche 1 bis 10, **dadurch gekennzeichnet, dass** der U-förmige Querschnitt (19) des Klammereinsatzes (14), der zum Zusammenwirken mit dem genannten Bauteil bestimmt ist, einen beginnend mit einem Einführungsspalt (23) sich in Richtung seines Profilgrundes (18) hin konisch leicht verjüngenden Verlauf aufweist.

12. Formteil nach einem der vorangegangenen Ansprüche 1 bis 11 **dadurch gekennzeichnet, dass** die dem jeweiligen Profilgrund (18, 28) abgekehrten freien Enden des Klammereinsatzes (14) sowie des Klammerteils (15) zur Außenseite hin abgekantete Abschnitte (16',17'; 26',27') aufweisen.

13. Formteil nach Anspruch 12, **dadurch gekennzeichnet, dass** die genannten abgekanteten Abschnitte in den Werkstoff des genannten Grundkörpers eingebunden sind.

14. Formteil nach einem der vorangegangenen Ansprüche 1 bis 13, **dadurch gekennzeichnet, dass** das Klammerteil (15) mit Querprofilierungen versehen ist, die in Verbindung mit ihrer Einbindung in den Werkstoff des genannten Grundkörpers zur Darstellung eines Formschlusses senkrecht zu einer Querschnittsebene des Klammerteils (15) wirksam sind.

15. Formteil nach einem der vorangegangenen Ansprüche 1 bis 14, **dadurch gekennzeichnet, dass** die Befestigungseinrichtung (13) einen sowohl bezüglich einer Querschnittsmittelebene (23, 24) als auch einer Seitenansichtsebene (25) symmetrischen Aufbau aufweist.

## Claims

1. Moulded part (I) consisting of a base body, formed by a casting or injection process, and an attachment device (13) which is connected to the base body whilst it is being moulded and is intended and designed to be an attachment of the moulded part (1) on a web-like component which fulfils a supporting function, wherein the attachment device (13) consists of a U-shaped metallic clamp part (15) into which there is inserted a U-shaped clamp insert (14) which defines a slot intended to receive said component, imparts at least a frictional engagement with the said component and consists of synthetic material, **characterised in that** resilient tongues (34, 34'; 35, 35') are integrally formed on the clamp part (15) and extend away from the structure thereof on the outside.

2. Moulded part as claimed in Claim 1, **characterised in that** the resilient tongues (34, 34'; 35, 35') extend at an angle with respect to a cross-sectional centre plane (24) and extend away from this cross-sectional centre plane (24) as seen in the direction of a profile base (28).

3. Moulded part as claimed in Claim 1 or 2, **characterised in that** the clamp part (15) is incorporated at least partly into a shell consisting of synthetic material.

4. Moulded part as claimed in Claim 1 or 2, **characterised in that** the clamp part (15) is incorporated at least partly into a film consisting of synthetic material.

5. Moulded part as claimed in any one of the preceding Claims I to 4, **characterised in that** the resilient tongues (34, 34'; 35, 35') are formed by wall sections of the clamp part (15) which have an outwardly extending shape and are partly delimited by a slot.

6. Moulded part (1) as claimed in any one of the preceding Claims 1 to 4, **characterised in that** said base body consists of an elastomer material.

7. Moulded part (1) as claimed in any one of the preceding Claims I to 6, **characterised in that** the clamp insert (14) is held within the clamp part (15) at least in a frictionally engaged manner.

8. Moulded part (1) as claimed in any one of the preceding Claims 1 to 7, **characterised in that** inwardly extending resilient tongues (29, 30) are integrally formed on the inside of the clamp part (15), and **in that** these resilient tongues are received in outer recesses (21, 21') of the clamp insert (14) when the attachment device (13) is in the assembled state.

9. Moulded part as claimed in Claim 8, **characterised in that** the resilient tongues (29, 30) are formed by inwardly formed wall sections of the clamp part (15) which are at least partly surrounded by a slot.

10. Moulded part as claimed in Claim 8 or 9, **characterised in that** the resilient tongues (29, 30) of the clamp part (15) extend in the planes of the walls or limbs (16, 17) of the clamp insert (14) when the attachment device (13) is in the assembled state.

11. Moulded part as claimed in any one of the preceding Claims 1 to 10, **characterised in that** the U-shaped cross-section (19) of the clamp insert (14), which is intended to co-operate with said component, has a profile which slightly tapers conically in the direction of its profile base (18) starting from an insertion gap (23).

12. Moulded part as claimed in any one of the preceding Claims I to 11, **characterised in that** the free ends of the clamp insert (14) and of the clamp part (15) remote from the respective profile base (18, 28) have sections (16', 17'; 26', 27') which are bent towards the outside.

13. Moulded part as claimed in Claim 12, **characterised in that** said bent sections are incorporated into the material of said base body.

14. Moulded part as claimed in any one of the preceding Claims 1 to 13, **characterised in that** the clamp part (15) is provided with transverse profiles which in conjunction with their incorporation into the material of said base body are effective in creating a positive-locking connection perpendicular to a cross-sectional plane of the clamp part (15).

15. Moulded part as claimed in any one of the preceding Claims 1 to 14, **characterised in that** the attachment device (13) has a construction which is symmetrical with respect to a cross-sectional centre plane (23, 24) and also to a side view plane (25).

## Revendications

1. Pièce moulée (1) constituée d'un corps de base formé par coulée ou par moulage par injection, et d'un dispositif de fixation (13) relié au corps de base pendant son formage, lequel est prévu et réalisé pour obtenir une fixation de la pièce moulée (1) sur un composant en forme d'entretoise ayant fonction de support, ledit dispositif de fixation (13) étant composé d'une pièce métallique de serrage (15) en forme de U, dans laquelle est mise en place une garniture de serrage (14) en forme de U réalisée en matière synthétique, définissant une fente destinée à recevoir ledit composant et assurant au moins un accouplement à friction avec ledit composant, **caractérisée en ce que** des languettes flexibles (34, 34' ; 35, 35') sont formées sur la pièce de serrage (15), lesquelles s'écartent de sa structure vers l'extérieur.

2. Pièce moulée selon la revendication 1, **caractérisée en ce que** les languettes flexibles (34, 34' ; 35, 35') s'étendent en formant un angle par rapport à un plan central de section transversale (24), et cela en s'éloignant dudit plan central de section transversale (24) - en pointant dans la direction d'un fond de profilé (28).

3. Pièce moulée selon la revendication 1 ou la revendication 2, **caractérisée en ce que** la pièce de serrage (15) est au moins partiellement incorporée dans une enveloppe en matière synthétique.

4. Pièce moulée selon la revendication 1 ou la revendication 2, **caractérisée en ce que** la pièce de serrage (15) est au moins partiellement incorporée dans une feuille en matière synthétique.

5. Pièce moulée selon l'une des revendications 1 à 4, **caractérisée en ce que** les languettes flexibles (34, 34' ; 35, 35') sont réalisées par des segments de paroi de la pièce de serrage (15) formés vers l'extérieur, partiellement limités par une fente.

6. Pièce moulée (1) selon l'une des revendications 1 à 4, **caractérisée en ce que** ledit corps de base est formé d'une matière élastomère.

7. Pièce moulée (1) selon l'une des revendications 1 à 6, **caractérisée en ce que** la garniture de serrage (14) est maintenue au moins par accouplement à friction à l'intérieur de la pièce de serrage (15).

8. Pièce moulée (1) selon l'une des revendications 1 à 7, **caractérisée en ce que** des languettes flexibles (29, 30) s'étendant vers l'intérieur sont formées sur la face intérieure de la pièce de serrage (15), et **en ce qu'**en état de montage du dispositif de fixation (13), lesdites languettes flexibles sont engagées dans des évidements extérieurs (21, 21') de la garniture de serrage (14).

9. Pièce moulée selon la revendication 8, **caractérisée en ce que** les languettes flexibles (29, 30) sont réalisées par des segments de paroi de la pièce de serrage (15) formés vers l'intérieur, partiellement entourés par une fente.

10. Pièce moulée selon la revendication 8 ou la revendication 9, **caractérisée en ce qu'**en état de montage du dispositif de fixation (13), les languettes flexibles (29, 30) de la pièce de serrage (15) s'étendent sur les plans des parois ou des branches (16, 17) de la garniture de serrage (14).

11. Pièce moulée selon l'une des revendications 1 à 10, **caractérisée en ce que** la section transversale (19) en forme de U de la garniture de serrage (14) prévue pour coopérer avec ledit composant présente un contour se rétrécissant légèrement en cône à partir d'une fente d'insertion (23) vers son fond de profilé (18).

12. Pièce moulée selon l'une des revendications 1 à 11 **caractérisée en ce que** les extrémités libres de la garniture de serrage (14) et de la pièce de serrage (15) éloignées des fonds de profilé (18, 28) correspondants présentent des parties (16',17' ; 26',27') repoussées vers l'extérieur.

13. Pièce moulée selon la revendication 12, **caractérisée en ce que** lesdites parties repoussées sont incorporées à la matière dudit corps de base.

14. Pièce moulée selon l'une des revendications 1 à 13, **caractérisée en ce que** la pièce de serrage (15) est pourvue de profilages transversaux, lesquels agissent en liaison avec leur intégration à la matière dudit corps de base pour obtenir un accouplement par correspondance de forme perpendiculairement à un plan de section transversale de la pièce de serrage (15).

15. Pièce moulée selon l'une des revendications 1 à 14, **caractérisée en ce que** le dispositif de fixation (13) présente une structure symétrique tant par rapport à un plan central de section transversale (23, 24) que par rapport à un plan de vue de profil (25).
